**Europäisches Patentamt**

**European Patent Office**

**Office européen des brevets**

(19)

(11) Veröffentlichungsnummer: **0 245 861**
**B1**

(12) # EUROPÄISCHE PATENTSCHRIFT

(45) Veröffentlichungstag der Patentschrift: **16.01.91**

(51) Int. Cl.⁵: **B 60 N 2/02**

(21) Anmeldenummer: **87107015.7**

(22) Anmeldetag: **14.05.87**

(54) **Selbstarretierender Drehgelenkbeschlag, der durch Hin- und Herbewegen eines Betätigungshebels winkelverstellbar ist.**

(30) Priorität: **14.05.86 DE 3616290**

(43) Veröffentlichungstag der Anmeldung:
**19.11.87 Patentblatt 87/47**

(45) Bekanntmachung des Hinweises auf die
Patenterteilung:
**16.01.91 Patentblatt 91/03**

(84) Benannte Vertragsstaaten:
**FR GB SE**

(56) Entgegenhaltungen:
**EP-A-0 116 964**
**DE-A-3 115 942**
**DE-A-3 409 144**
**GB-A-1 120 805**

(73) Patentinhaber: **C. Rob. Hammerstein GmbH**
**Postfach 13 01 18 Merscheiderstrasse 167**
**D-5650 Solingen 13 (DE)**
(84) **FR GB SE**

(73) Patentinhaber: **Daimler Benz Aktiengesellschaft**
**Stuttgart-Untertürkheim Postfach 202**
**D-7000 Stuttgart 60 (DE)**
(84) **FR**

(72) Erfinder: **Bauer, Heinz**
**Hammerstrasse 9**
**D-5650 Solingen 11 (DE)**
Erfinder: **Becker, Burckhard, Dipl.-Ing.**
**Obenkatternberg 25**
**D-5650 Solingen 1 (DE)**
Erfinder: **Frohnhaus, Ernst-Reiner**
**Hammerstrasse 13**
**D-5650 Solingen 11 (DE)**
Erfinder: **Gedig, Alfred, Dipl.-Ing.**
**Hammerstrasse 28**
**D-5650 Solingen 11 (DE)**
Erfinder: **Klink, Josef, Dipl.-Ing.**
**Im Kranich 5**
**D-7270 Nagold (DE)**
Erfinder: **Koucky, Antonin**
**Ernst-Barlach-Strasse 81**
**D-7032 Sindelfingen (DE)**

Courier Press, Leamington Spa, England.

**EP 0 245 861 B1**

(74) Vertreter: **Bauer, Wulf, Dr.**
**Wolfgang-Müller-Strasse 12**
**D-5000 Köln 51 (Marienburg) (DE)**

**Beschreibung**

Die Erfindung bezieht sich auf einen selbstarretierenden Drehgelenkbeschlag, der durch Hin- und Herbewegen eines Betätigungshebels winkelverstellbar ist, insbesondere für eine Sitzhöhenverstellung oder Rückenlehnen-Neigungsverstellung von Fahrzeugsitzen,

mit einem Gestell, in dem eine Lagerwelle drehbar gelagert ist, die ein mit Zahnflanken versehenes Stellrad trägt, das mit dem zu verstellenden Arm des Drehgelenkbeschlags drehverbunden ist,

mit einer Schwenkachse, um die der Betätigungshebel aus einer Mittelstellung in beiden Drehrichtungen schwenkbar ist und die sich außerhalb des Stellrades befindet, wobei der Betätigungshebel zwei Mitnehmer trägt, die sich in Mittelposition des Betätigungshebels außer Eingriff mit dem Stellrad befinden und von denen beim Verschwenken des Betätigungshebels jeweils einer an eine benachbarte Zahnflanke des Stellrades anschlägt und dieses dreht,

und mit mindestens einem, am Gestell schwenkbar gelagerten Sperrarm, der bei in Mittelstellung befindlichem Betätigungshebel an einer Zahnflanke des Stellrades elastisch anliegt und dieses sperrt und erst durch Verschwenken des Betätigungshebels außer Eingriff kommt.

Bei diesem aus der DE—OS 34 09 144 vorbekannten Drehgelenkbeschlag wird die Verstellung des Stellrades gegenüber dem Gestell durch Hin- und Herschwenken, also durch Pumpbewegungen, des Betätigungshebels vorgenommen. Die Bewegungen laufen ähnlich wie bei einem Ratschenschraubenschlüssel ab. Dadurch bleiben die Bewegungen des Betätigungshebels auf einen kleinen Winkelbereich von beispielswiese ± 30° beschränkt, so daß dieser platzsparend und günstig, insbesondere für den Benutzer griffgünstig und ergonometrisch, angeordnet werden kann. Dadurch eignet sich die eingangsgenannte Verstellvorrichtung insbesondere für manuell betätigbare Drehgelenkbeschläge.

Der Betätigungshebel befindet sich normalerweise in seiner Mittelstellung, in der er vorzugsweise durch eine Rückstellfeder gehalten ist. In dieser Position beeinflußt er das Stellrad nicht, dieses ist durch den mindestens einen Sperrarm arretiert, der Sperrarm nimmt die Arretierstellung selbständig ein und muß gegen die Kraft einer Sperrfeder aus der Arretierstellung geschwenkt werden, wenn über den Betätigungshebel eine Verstellbewegung in das Stellrad eingeleitet werden soll.

Der Betätigungshebel kann relativ lang ausgebildet werden, wodurch eine große und benutzerfreundliche Kraftübersetzung der vorzugsweise manuell eingeleiteten Verstellkräfte erreicht wird. Bei dem vorbekannten Drehgelenkbeschlag ist der Betätigungshebel am freien Ende einer Koppelschwinge angelenkt, die an ihrem anderen Endbereich im Gestell drehbar gelagert ist. Eine Feder hält die Koppelschwinge und den Betätigungshebel in einer gestreckten Lage.

Weiterhin ist aus der FR—PS 2.210.953 ein Drehgelenkbeschlag vorbekannt, bei dem ein zwei Mitnehmer tragender Betätigungshebel zwischen Zahnflanken eines Stellrades eingeschwenkt werden kann, dieser Drehgelenkbeschlag ist aber nicht selbstarretierend. Dies gilt auch für den aus der DE—OS 31 15 942 vorbekannten Drehgelenkbeschlag, dessen Betätigungshebel um die Lagerachse schwenkbar ist und ebenfalls zwei Mitnehmer trägt, denen jeweils ein eigenes Stellrad zugeordnet ist. Unter dem Begriff "selbstarretierend" wird im Sinne der vorliegenden Anmeldung verstanden, daß der Drehgelenkbeschlag selbständig im Kraftrückflußwege sperrt, sobald der Betätigungshebel losgelassen wird. Die Arretierung wird dabei durch Eingriff des Sperrarms in das Stellrad erreicht, so daß selbstsperrende Getriebe oder dergleichen, wie sie beispielsweise aus der DE—AS 12 97 496 bekannt sind, nicht benötigt werden. Im Kraftrückflußweg können dadurch Kräfte auf den Drehgelenkbeschlag einwirken, daß der mit einem Drehgelenkbeschlag ausgestattete Fahrzeugsitz durch das Gewicht oder die Bewegungen eines Passagiers oder die auf einen Passagier beim Fahrbetrieb einwirkenden Beschleunigungskräfte belastet wird.

Ausgehend von dem vorbekannten Drehgelenkbeschlag der eingangsgenannten Art liegt der Erfindung die Aufgabe zugrunde, die Nachteile dieses Drehgelenkbeschlages zu vermeiden und ihn dahingehend weiterzubilden, daß er beim praktischen Fahrbetrieb weniger zum Klappern neigt, eine für den Benutzer spürbar bessere Einleitung der Verstellkräfte ermöglicht, einen größeren Spielraum hinsichtlich der Übersetzung zuläßt und eine höheren Wirkungsgrad hat.

Diese Aufgabe wird ausgehend von dem selbstarretierenden Drehgelenkbeschlag der eingangsgenannten Art dadurch gelöst,

daß die Schwenkachse des Betätigungshebels im Gestell gelagert ist,

die Mitnehmer jeweils um eine Mitnehmerachse schwenkbar am Betätigungshebel angelenkt sind, um die sie bei in Mittelstellung befindlichem Handhebel ohne Berührung mit den Zahnflanken des Stellrades schwenkbar sind, wobei jedem Mitnehmer ein Anschlag am Betätigungshebel zugeordnet ist, der ein Wegschwenken der Mitnehmer von der benachbarten Zahnflanke des Stellrades unterbindet,

daß am Betätigungsarm zwei Steuernocken angeordnet sind,

daß zwei Sperrarme vorgesehen sind, von denen jeder jeweils nur in einer Drehrichtung sperrt, in der anderen Drehrichtung aber über die Zahnflanken des Stellrades rutscht, und

daß jedem Sperrarm ein Lösearm zugeordnet ist, von denen einer beim Verschwenken des Betätigungshebels aus der Mittelstellung an einen Steuernocken anschlägt, wodurch der Lösearm mitgenommen wird und den zugehörigen, in der entsprechenden Antriebsrichtung sperrenden Sperrarm außer Eingriff bringt.

Der Betätigungshebel ist somit direkt am Gestell gelagert, wodurch einerseits beim Fahrbetrieb am Betätigungshebel auftretende Beschleunigungskräfte günstig abgefangen und ein Klappern sowie Vibrieren des Betätigungshebels besser beherrscht werden kann und andererseits der Benutzer beim Hin- und Herschwenken des Betätigungshebels eine definierte Schwenkachse spürt, so daß die krafteinleitenden Bewegungen auf einer präzise vorgegebenen Bewegungsbahn, nämlich einer Kreisbahn um die Schwenkachse, erfolgen.

Durch die schwenkbare Anordnung der Mitnehmer am Betätigungshebel ist sichergestellt, daß die Mitnehmer bei der antriebsfreien Rückbewegung des Betätigungsarms über zumindest eine Zahnflanke rutschen können, ohne die zuvor erreichte Verstellbewegung wieder rückgängig zu machen. Zwischen Betätigungshebel und Stellrad liegen daher ähnliche Verhältnisse wie bei zwei im Eingriff befindlichen Zahnrädern vor, wobei der Betätigungshebel als ein Zahnrad mit nur einem Zahn anzusehen ist, der nach einer krafteinleitenden Hinbewegung beim Rückhub über mindestens einen Zahn des anderen Zahnrades (Stellrad) gleiten kann, so daß beim Rückhub der Eingriff nicht mehr vorhanden ist.

Die am Betätigungsarm angeordneten Steuernocken dienen dazu, bei einer Schwenkbewegung des Betätigungshebels aus seiner Mittelstellung die dabei auftretenden Bewegungen über einen der Lösearme auf den zugehörigen Sperrarm zu übertragen, so daß dieser aus seiner normalerweise arretierenden Position in eine Freigabestellung gelangt. Dabei ist das Zusammenspiel der Steuernocken mit dem Lösearm konstruktiv so gelöst, daß der Lösearm bei beginnender Schwenkbewegung des Betätigungshebels zunächst mitgenommen wird, anschließend aber vom Steuernocken freikommt, so daß der Sperrarm wieder eingriffsbereit am Umfang des Stellrades elastisch anliegt, zunächst aber die Drehbewegung des Stellrades noch nicht sperrt. Er schlägt jedoch in Weiterführung der Drehbewegung des Stellrades an die nächste Zahnflanke an und sperrt dadurch den Stellarm, wodurch auch die Hinbewegung des Betätigungshebels gestopt wird. Bei der Rückbewegung rutschen die Steuernocken wieder in Eigriff mit dem jeweiligen Lösearm, wobei sie diesen ohne daß der Sperrarm bewegt wird, kurzzeitig bewegen.

Im Gegensatz zum vorbekannten Drehgelenkbeschlag der eingangsgenannten Art sind also bei dem erfindungsgemäßen Drehgelenkbeschlag die Funktionen Antrieb, die von den Mitnehmern übernommen werden, und Arretierung, die über die Steuernocken, die Lösearme und die Sperrarme erfolgen, funktionsmäßig voneinander getrennt. Dadurch können die Mitnehmer um ihre Mitnehmerachse schwenken, ohne daß dies einen Einfluß auf die Bewegungen der sperrenden Organe hätte. Jedes Organ kann damit seiner eigentlichen Funktion optimal angepaßt werden.

Beim praktischen Betrieb werden die Antriebskräfte nahezu ausschließlich tangential in die Stellscheibe eingeleitet, so daß die auf die Lagerwelle entfallende Komponente der Verstellkraft im Vergleich mit dem vorbekannten, selbstarretierenden Drehgelenkbeschlag deutlich verringert ist. Im Vergleich zu diesem kann auch die Übersetzung, also das Verhältnis von Schwenkwinkel des Betätigungshebels zu hierdurch hervorgerufenem Schwenkwinkel des Stellrades, in einem größeren Intervall liegen, denn der Abstand der Mitnehmer von der Schwenkachse des Betätigungshebels kann innerhalb weiter Grenzen variiert werden, jedenfalls ist man nicht — wie bei dem vorbekannten Drehgelenkbeschlag — darauf angewiesen, daß dieser Abstand größer ist als der Außenradius des Stellrades.

In vorzugsweiser Weiterbildung der Erfindung liegen bei in Mittelstellung befindlichem Betätigungshebel die Mitnehmer, die Steuernocken, die Sperrarme und die Lösearme klappsymmetrisch zur Verbindungslinie von Schwenkachse und Achse der Lagerwelle. Damit können beide Mitnehmer usw. jeweils identisch gefertigte Teile sein, es ist jedenfalls nicht notwendig, zwei unterschiedliche Mitnehmer, bzw. Sperrarme usw. fertigen zu müssen. Weiterhin wird durch die symmetrische Anordnung erreicht, daß für die Bewegungshübe in beiden Schwenkrichtungen jeweils gleiche Verhältnisse vorliegen, so daß ein Benutzer unterschiedslos unter gleichen Voraussetzungen in beide Verstellrichtungen verstellen kann.

In einer anderen Weiterbildung sind die Sperrarme jeweils doppelarmig ausgeführt, wobei der erste Arm die Sperrfläche ausbildet, während am zweiten Arm der zugeordnete Lösearm angelenkt ist. Diese Anordnung ermöglicht eine konstruktiv einfache Einleitung der über den Steuernocken auf den Sperrarm zu übertragenden Entsperrbewegung. Durch die spezielle Wahl der Längen der beiden Arme des Sperrarms kann die notwendige Umsetzung des für ein Entsperren benötigten Schwenkwinkels der Steuernocken auf den Sperrarm präzise und unabhängig von anderen Bewegungsabläufen des Drehgelenkbeschlags vorgegeben werden.

In einer weiteren, vorzugsweisen Ausbildung hat jeder Lösearm eine Mitnehmernase, die in Mittelstellung des Betätigungshebels mit ihrer Innenflanke geringfügig vor dem zugehörigen Steuernocken liegt, wobei bei beginnendem Verschwenken des Betätigungshebels der Lösearm mitgenommen wird, bei Weiterführung der Schwenkbewegung der Steuernocken aber über die Innenflanke rutscht und dadurch den Lösearm freigibt. Hierdurch wird erreicht, daß der Sperrarm in eine sperrbereite Position gelangen kann, bevor die verstellende Hinbewegung des Betätigungshebels durchgeführt ist.

Ebenso wird in Weiterbildung vorgeschlagen, daß die Außenflanke der Mitnehmernase so ausgebildet ist, daß der beim nichtverstellenden Rückhub an diese Außenflanke anschlagende Steuernocken die Nase seitlich wegdrücken und damit den Lösearm ohne Einfluß auf den Sperrarm verschwenken kann, so daß der Steuernocken wieder in Anlage an die Innenflanke der Mitnehmernase kommt. Hierdurch-werden die ursprünglich vor einer Verstellbewegung vorliegenden geometrischen Verhältnisse wieder erreicht.

In bevorzugter Weiterbildung der Erfindung wird vorgeschlagen, daß am Lösearm ein Blockiervorsprung angeordnet ist, der sich bei in Ruhestellung befindlichem Lösearm außerhalb des Außenkreises des Stellrades befindet und bei Zug auf den Lösearm durch den Steuernocken dann in den Bewegungskreis der Zahnflanken des Stellrades gelangt, wenn der Sperrarm gerade freikommt. Hierdurch wird vermieden, daß bei einer Verstellbewegung eine im Kraftrückflußweg angreifende Kraft, die das Stellrad in die gleiche Drehrichtung belastet wie die beabsichtigte Verstellkraft, sich das Stellrad frei drehen kann. Vielmehr wird es durch den Blockiervorsprung eingefangen, die freie Drehbewegung des Stellrades also verhindert.

Weitere Vorteile und Merkmale der Erfindung ergeben sich aus den übrigen Ansprüchen sowie der nun folgenden Beschreibung eines nicht einzuschränkenden Ausführungsbeispiels der Erfindung, das unter Bezugnahme auf die Zeichnung näher erläutert wird. In dieser zeigen:

Fig. 1 eine schematische Draufsicht auf einen Drehgelenkbeschlag, der Betätigungshebel befindet sich in der Mittelstellung, der Beschlag ist arretiert,

Fig. 2 eine Darstellung entsprechend Fig. 1, jedoch ist nunmehr der Betätigungshebel um einen Winkel verschwenkt, der ausreicht, den rechten Sperrarm freizuschwenken, der rechte Mitnehmer liegt an einer benachbarten Zahnflanke an, der verstellende Anteil des Bewegungshubes kann nun erfolgen, und

Fig. 3 eine Darstellung entsprechend Fig. 1, jedoch für den Zustand des Endes eines Hinschwenkhubes, die Arretierung ist wieder gewährleistet, an diesen Zustand schließt sich ein Rückschwenkhub an.

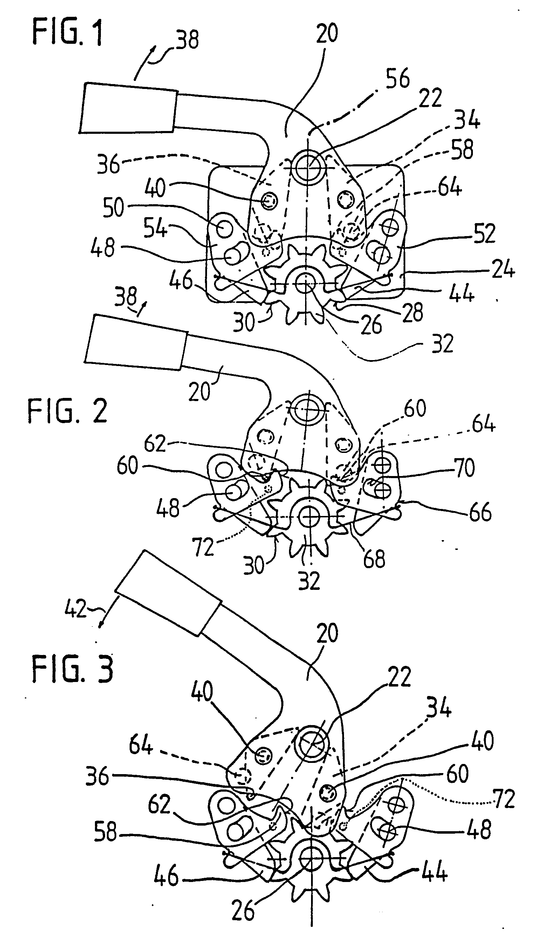

Der aus den Figuren ersichtliche selbstarretierende Drehgelenkbeschlag hat einen Betätigungshebel 20, der um eine Schwenkachse 22 aus der in Fig. 1 gezeigten Mittelstellung nach links und nach rechts um jeweils etwa 30° verschwenkt werden kann. Die Schwenkachse 22 ist in einem Gestell 24 gelagert, das in Fig. 1 schematisch angedeutet ist. In diesem Gestell 24 ist auch eine Lagerwelle 26 so angeordnet, daß sich ein mit Zahnflanken 28, 30 versehenes Stellrad 32 um die Achse der Lagerwelle 26 drehen kann. Es ist mit einem (nicht dargestellten) zu verstellenden Arm des Drehgelenkbeschlags drehverbunden, dessen Winkelstellung gegenüber dem Gestell 24 einstellbar ist.

Der Betätigungshebel 20 trägt in seinem unterhalb der Schwenkachse 22 befindlichen Stellbereich zwei etwa dreieckförmige Mitnehmer 34, 36, deren untere, freie Endbereiche nasenförmig ausgebildet sind. In der Darstellung gemäß Fig. 1 sind die Mitnehmer 34, 36 außer Eingriff mit den Zahnflanken 28, 30 des Stellrades 32, ihre Nasen befinden sich aber in unmittelbarer Nähe einer im Uhrzeigersinn vorn liegenden Zahnflanke 28 (dies gilt für den rechten Mitnehmer 34) bzw. eine im Uhrzeigersinn hinten liegenden Zahnflanke 30, dies gilt für den linken Mitnehmer 36. Die Nasen der beiden Mitnehmer 34, 36 liegen auf einem Kreisbogen um die Schwenkachse, der in Nähe des Fußkreises des Stellrades 32 verläuft. Es liegen hier somit analoge Verhältnisse wie bei zwei kämmenden Zahnrädern vor, wobei das obere Zahnrad durch den Stellarm des Betätigungshebels 20 und seine beiden Mitnehmer 34, 36 gebildet wird.

Wird der Betätigungshebel 20 aus der in Fig. 1 gezeigten Mittelposition im Sinne des Pfeiles 38 nach oben gezogen, so schlägt der rechte Mitnehmer 34 mit seiner Nase gegen die benachbarte Zahnflanke 28, dieser Zustand ist in Fig. 2 gezeigt. Durch Fortsetzen der Bewegung im Sinne des Pfeiles 38 wird das Stellrad gegen den Uhrzeigersinn gedreht, es erfolgt also der eigentliche Verstellvorgang. Dieser ist in der Figur 3 abgeschlossen.

Die Mitnehmer 34, 36 sind jeweils um eine Mitnehmerachse 40 schwenkbar am Stellarm des Betätigungshebels 20 angelenkt. Ihre Nasen werden durch eine in den Figuren nicht dargestellte Mitnehmerfeder voneinander weggedrückt, sie liegen mit ihrem oberen Endbereich an der Schwenkachse 22 an, wodurch die in den Figuren dargestellte, stabile Normalposition der Mitnehmer 34, 36 erreicht wird. Diese Normalposition bleibt bei dem soeben beschriebenen Verstellvorgang ungeändert, die über die Nase des rechten Mitnehmers 34 ausgeübten Verstellkräfte führen nicht zu einer Verschwenkung des Mitnehmers 34, weil dieser sich mit seinem oberen Endbereich an der Schwenkachse 22 abstützt.

Die Verschwenkbarkeit der Mitnehmer 34, 36 wird nicht für das in den Figuren dargestellte Hinbewegen im Sinne des Pfeils 38, sondern für die anschließende, im Gegendrehsinn erfolgende Herbewegung benötigt. Sobald diese ausgehend von der Darstellung gemäß Fig. 3 eingeleitet wird (Pfeil 42), bewegt sich die Nase des rechten Mitnehmers 34 zunächst frei auf dem beschriebenen Kreisbogen, bis sie an der hinteren Zahnflanke des in der Verstellrichtung nächstfolgenden Zahnes des Stellrades 32 anschlägt. Sie kann aber keine Verstellbewegung durchführen, weil das Stellrad gegen eine Drehung im Uhrzeigersinn gesperrt ist. Der Mitnehmer 34 schwenkt vielmehr im Uhrzeigersinn um seine Mitnehmerachse 40 und rutscht über den Zahn hinweg. Dies ist möglich, weil die geometrischen Verhältnisse so gewählt sind, daß in der Darstellung gemäß Fig. 1 der Schwenkkreis der Nase des Mitnehmers 34 um seine Mitnehmerachse 40 den Außenkreis des Stellrades 32 nicht berührt, sondern außerhalb dieses Kreises liegt. Dadurch gelangt der rechte Mitnehmer wieder in die Position, wie sie aus Fig. 1 ersichtlich ist.

Bei der beschriebenen Stellbewegung hat der linke Mitnehmer 36 lediglich eine freie, ungehinderte Bewegung ausgeführt, nach vollständiger Herbewegung im Sinne des Pfeiles 42 befindet er sich ebenfalls wieder in der Position gemäß Fig. 1.

Eine Schwenkbewegung des Betätigungshebels 20 in die Gegenrichtung zum Pfeil 38 bewirkt einen völlig analogen Bewegungsablauf, jedoch wird der Transport nun durch den linken Mitnehmer 36 bewirkt.

Die bisherige Beschreibung bezog sich lediglich auf den eigentlichen Verstellvorgang, im folgenden wird nun erläutert, wie im Zusammenhang mit diesem Verstellvorgang die Arretierung des Stellrades 32 freigegeben wird und anschließend wieder einrastet:

Für jede Drehrichtung ist ein Sperrarm 44, 46 vorgesehen, der jeweils um eine Sperrarmachse 48 am Gestell 24 schwenkbar angelenkt ist. Der rechte Sperrarm 44 ist den hinteren Zahnflanken 30 zugeordnet, der linke Sperrarm 46 arbeitet mit den vorderen Zahnflanken 28 zusammen. Bei in Mittelstellung befindlichem Betätigungshebel (Fig. 1) sind beide Sperrarme 44, 46 in Anlage an einer Zahnflanke 30 bzw. 28, diese Anlage wird durch eine später noch zu beschreibende Feder erreicht. Diese Anlage erfolgt entlang einer Flanke, die im wesentlichen senkrecht zu einer Tangente an den Anlagepunkt verläuft. Dadurch ist ausgeschlossen, daß die Sperrarm selbständig außer Eingriff schwingen können, wenn wenn beispielsweise eine Drehkraft am Stellrad (im Kraftrückflußwege) angreift.

Oberhalb ihrer Sperrarmachse 48 sind die Sperrarme verlängert, dort ist um ein Gelenk 50 schwenkbar jeweils ein Lösearm 52, 54 angelenkt. Er ist etwa L-förmig und hat eine nach oben weisende, näher an der Verbindungslinie 56 der Schwenkachse 22 mit der Lagerwelle 26 liegende Nase 58. Diese hat jeweils eine Innenflanke 60 und eine Außenflanke 62. Mit diesen wirkt jeweils ein Mitnehmernocken 64 zusammen, am Stellarm des Betätigungshebels 20 sind insgesamt zwei Mitnehmernocken 64 angeordnet. In der Darstellung gemäß Fig. 1 liegen beide Mitnehmernocken 64 kurz vor der Innenflanke 60 des zugehörigen Lösearms 52 bzw. 54 an. Der Verlauf der Innenflanke 60 am jeweiligen Berührungspunkt mit dem Mitnehmernocken 64 entspricht weitgehend einem Kreisbogen um den Lagerpunkt 50, so daß sichergestellt ist, daß die Mitnehmernocken bei Betätigung den Sperrarm (44, 46) um die Sperrarmachse bis zur Überschreitung des Selbsthemmungswinkels an der Innenflanke des Lösearms bewegen.

Wird nun ausgehend von der Darstellung gemäß Fig. 1 der Betätigungshebel 20 im Sinne des Pfeils 38 verschwenkt, so bleibt der rechte Mitnehmernocken 64 in Anlage an der Innenflanke 60, der Anlagewinkel wird jedoch mit zunehmender Schwenkbewegung kleiner und unterschreitet schließlich den Winkel der Selbsthemmung, so daß der rechte Mitnehmernocken 64 von der Innenflanke 60 herunterrutscht und die Nase 58 gänzlich freigibt, wodurch die in Fig. 3 abgebildete Position eingenommen wird.

Durch den rechten Mitnehmernocken 64 wird also bei der beschriebenen Hinbewegung anfänglich ein Zug auf den Lösearm 52 ausgeübt, die entsprechende Kraft bricht aber mit fortschreitender Schwenkbewegung ab. Dadurch wird der mit dem Lösearm gelenkverbundene Sperrarm 44 zunächst aus seiner Sperrstellung gezogen, diesen Zustand zeigt Fig. 2, anschließend schwenkt er aber wieder in Richtung auf das Stellrad 32 und ist eingriffsbereit. Er kommt aber erst in Anlage an die hintere Zahnflanke 30 des nächst folgenden Zahnes, wenn die in Fig. 3 dargestellte Endposition der Hinbewegung erreicht ist. Dann begrenzt er die Hinbewegung für den Benutzer spürbar, der sodann die Herbewegung ausführt oder den Betätigungshebel 20 freigibt, so daß dieser unter Wirkung einer eigenen Rückstellfeder wieder in die Mittelposition gemäß Fig. 1 schwenkt.

Die Sperrarme 44, 46 haben auf ihrer Innenseite jeweils eine Abrundung. Hierdurch wird erreicht, daß der in der Verstellrichtung jeweils nicht sperrende Sperrarm, im beschriebenen Beispiel ist es der linke Sperrarm 46, über den nächsten Zahn rutschen kann und in Anlage an die vordere Zahnflanke 28 des nächst folgenden Zahnes gelangt.

Die Lösearme 52, 54 haben außenseitige Einbuchtungen 66, die sich unterhalb der Sperrarmachse 48 bzw. des Gelenks 50 befinden und von den Enden einer Zugfeder 68 umgriffen werden, die die Einbuchtungen 66 gegeneinander zieht. Diese bewirkt einerseits, daß die Nasen 58 der Lösearme 52, 54 nach oben schwenken, und andererseits zieht sie die Sperrarme 44 in die Sperrstellung.

Zusätzlich kann noch eine weitere Zugfeder zwischen den unteren, freien Enden der Sperrarme 44, 46 vorgesehen sein, die diese gegeneinander zieht. Dadurch wird vermieden, daß beim Zurückfedern der Sperrarme 44, 46, also sobald der Steuernocken von der Innenflanke 60 abgerutscht ist, die Sperrarme 44, 46 zu stark am Stellrad 32 anschlagen und elastisch zurückfedern können.

Die Lösearme 52, 54 haben jeweils ein bogenförmiges Langloch 70, das die Sperrarmachse 48 umgreift. Hierdurch wird der Schwenkwinkel der Lösearme 52, 54 gegenüber den Sperrarmen 44, 46 begrenzt. In den gezeigten Figuren liegt die Sperrarmachse 48 stets am äußeren Endbereich dieses Langlochs 70, d. h. die Relativposition des Sperrarms zu seinem Lösearm hat sich nicht geändert. Die Relativposition ändert sich aber, wenn beim Rückhub entsprechend Pfeil 42 der Mitnehmernocken 64 an der Außenflanke 62 des rechten Lösearms 52 anschlägt und diesen und damit den Sperrarm 44 nach unten schwenkt, bei dieser Bewegung bleibt der zugehörige Sperrarm 44 im Eingriff.

Die räumliche Anordnung der einzelnen Teile senkrecht zur Zeichenebene ist wie folgt: In der obersten Ebene, d. h. in größter Entfernung vom unten liegenden Gestell 24 befindet sich der Betätigungshebel. Darunter, mit einem Freiraum nach oben befinden sich die Lösearme 52, 54, bis zu deren Ebene auch die Steuernocken 64 nach unten reichen. Weiter unterhalb befinden sich die Mitnehmer 34, 36, Sperrarme 44, 46 und das Stellrad 32 in derselben Ebene. Die Mitnehmer 34, 36 sind über die Mitnehmerachse 40 im Abstand vom Betätigungshebel 20 angeordnet, so daß sie sich ungehindert von den Steuernocken 64 bewegen können.

Wie Fig. 1 erkennen läßt, ist die genannte Verbindungslinie 56 eine Klappsymmetrieachse praktisch aller Teile, ausgenommen der Betätigungsarm des Betätigungshebels 20. Wie die Figuren weiterhin zeigen, können für den Drehbeschlag relativ kleine, damit leichtgewichtige Teile eingesetzt werden, wodurch der Drehgelenkbeschlag insgesamt räumlich sehr klein baut, und ein geringes Gewicht hat. Er zeichnet sich durch einen sehr sauberen Funktionsablauf aus. Das Stellrad 32, das im gezeigten Ausführungsbeispiel als Ritzel ausgebildet ist, kann auch beliebige andere Zahnflanken aufweisen, die gezeigte Ausführung hat aber den Vorteil, daß das Ritzel zugleich mit einer Verzahnung eines zu verstellenden Arms des Drehgelenks kämmen kann.

Am unteren Ende der Außenflanke jedes Lösearms 52, 54 ist noch ein Blockiervorsprung 72 vorgesehen, der nach unten in die Ebene des Stellrades 32 reicht. Er befindet sich in der Darstellung gemäß Fig. 1 außerhalb des Außenkreises des-Stellrades 32. Bei Beginn einer Hinbewegung im Sinne des Pfeiles 38, wenn der Lösearm 52 entsprechend der Bewegung des rechten Steuernockens 64 auf einer Kreisbahn nach unten und nach links gedrückt wird, und kurz bevor der Sperrarm 44 entarretiert ist, gelangt er aber in den Bewegungsbereich der Zahnflanken 28, 30. Er hat nur dann eine Funktion, wenn nach dem Entarretieren das Stellrad 32 sich aufgrund einer im Rückflußwege angreifenden Kraft sich im Gegensinn zum Uhrzeigersinn, also in der beabsichtigten Richtung der Verstellung, bewegt. Dann nämlich schlägt die hintere Zahnflanke 30 des in Drehrichtung nächst folgenden Zahnes am Blockiervorsprung 72 an, wodurch eine weitere, freie Drehung unterbunden ist. Normalerweise bleibt der Blockiervorsprung 72 allerdings frei von den Zahnflanken 28, 30, er behindert den sonstigen Bewegungsablauf nicht, weil er nach Abrutschen des Steuernockens 64 von der Innenflanke 60 des rechten Lösearms 52 wieder außerhalb des Bewegungskreises des Stellrades 32 geschwenkt wird, bevor er den Bewegungsablauf hindern könnte, siehe Fig. 3.

Eine komplette Hin- und Herbewegung läuft damit ausgehend von Fig. 1 wie folgt ab: Mit beginnender Schwenkbewegung im Sinne des Pfeiles 38 nähert sich die Nase des rechten Mitnehmers 34 der benachbarten Zahnflanke 30, zugleich zieht der rechte Steuernocken 64 den rechten Lösearm 52 nach schräg links unten. Dadurch schwenkt der rechte Sperrarm um seine Sperrarmachse, wobei er an der Zahnflanke 30 entlangrutscht und schließlich in die Freigabestellung gelangt. Wenn dies geschieht,schlägt gleichzeitig die Nase des rechten Mitnehmers 34 an der Zahnflanke 28 an, der Zustand ist in Fig. 2 gezeigt.

Bei Weiterführung der Bewegung im Sinne des Pfeils 38 transportiert nun die Nase des rechten Mitnehmers das Stellrad 32 in Gegenrichtung zum Uhrzeigersinn. Sobald eine ausreichende Verdrehung erreicht wurde, die es dem rechten Sperrarm 44 unmöglich macht, wieder in die alte Position zu gelangen, rutscht der Steuernocken 64 von der Innenflanke 60 ab, wodurch nun der Sperrarm 44 nicht mehr ausgeschwenkt wird, sondern unter der Wirkung der Zugfeder 68 auf das Stellrad 32 zuschwenkt. Hier kann er zunächst noch nichts bewirken, er beeinflußt also die weitere Drehverstellung des Stellrades 32 nicht. Sobald er aber an der Zahnflanke 30 des in Drehrichtung nachfolgenden Zahns anschlägt, wird die Drehbewegung des Stellrades 32 gestopt.

Bei dieser beschriebenen Hinbewegung ist der linke Sperrarm 46 über einen Zahn des Stellrades 32 gerutscht. Nun setzt die Rückbewegung im Sinne des Pfeiles 42 ein, bei diesem Bewegungshub bleibt die Arretierung des Stellrades 32 erhalten. Der rechte Mitnehmer 34 schwenkt zunächst in Nähe des Fußkreises des Stellrades 32 und schlägt an die Zahnflanke 30 an. Etwa gleichzeitig schlägt der rechte Steuernocken 64 an die Außenflanke 62 des rechten Lösearms 52 an. Dieser taucht nach unten weg, so daß der Steuernocken 64 wieder kurz vor Anlage an die Innenflanke 60 kommt. Gleichzeitig hat sich der rechte Mitnehmer 34 im Uhrzeigersinne verschwenkt und ist über den nachfolgenden Zahn gerutscht. Damit ist die in Fig. 1 gezeigte Stellung wieder erreicht.

Die Teile 32, 34, 36, 44, 46, 52 und 54 können flache Blechstanzteile sein. Wie die Figuren zeigen, sind die mit gleichem Namen versehenen Teile jeweils identisch ausgebildet, also für die rechte und linke Seite gleich.

**Patentansprüche**

1. Selbstarretierender Drehgelenkbeschlag, der durch Hin- Herbewegen eines Betätigungshebels (20) winkelverstellbar ist, insbesondere für eine Sitzhöhenverstellung oder Rückenlehnen-Neigungsverstellung von Fahrzeugsitzen,
mit einem Gestell (24), in dem eine Lagerwelle (26) drehbar gelagert ist, die ein mit Zahnflanken (28, 30) versehenes Stellrad (32) trägt, das mit dem zu verstellenden Arm des Drehgelenkbeschags drehverbunden ist,
mit einer Schwenkachse (22), um die der Betätigungshebel (20) aus einer Mittelstellung in beiden Drehrichtungen schwenkbar ist und die sich außerhalb des Stellrades (32) befindet,
wobei der Betätigungshebel (20) zwei Mitnehmer (34, 36) trägt, die sich in Mittelposition des Betätigungshebels (20) außer Eingriff mit dem Stellrad (32) befinden und von denen beim Verschwenken des Betätigungshebels (20) jeweils einer an eine benachbarte Zahnflanke (28 oder 30) des Stellrades (32) anschlägt und dieses dreht,
und mit mindestens einem, am Gestell (24) drehbar gelagerten Sperrarm (44; 46), der bei in Mittelstellung befindlichem Betätigungshebel (20) an einer Zahnflanke (28; 30) des Stellrades (32) anliegt und dieses sperrt und durch Verschwenken des Betätigungshebels (20) ausser Eingriff kommt, dadurch gekennzeichnet,

daß die Schwenkachse (22) des Betätigungshebels (20) im Gestell (24) gelagert ist,

daß die Mitnehmer (34, 36) jeweils um eine Mitnehmerachse (40) schwenkbar am Betätigungshebel (20) angelenkt sind, um die sie bei in Mittelposition befindlichem Handhebel ohne Berührung mit den Zahnflanken (28, 30) des Stellrades (32) schwenkbar sind, wobei jedem Mitnehmer (34, 36) ein Anschlag (Schwenkachse 22) am Betätigungshebel (20) zugeordnet ist, der ein Wegschwenken der Mitnehmer (34, 36) von der benachbarten Zahnflanke (28; 30) des Stellrades (32) unterbindet,

daß am Betätigungshebel (20) zwei Steuernokken (64) angeordnet sind, daß zwei Sperrarme (44, 46) vorgesehen sind, von denen jeder jeweils nur in einer Drehrichtung sperrt, in der anderen Drehrichtung aber über die Zahnflanken (28; 30) des Stellrades (32) rutscht,

und daß jedem Sperrarm (44, 46) ein Lösearm (52, 54) zugeordnet ist, von denen jeweils einer beim Verschwenken des Betätigungshebels (20) aus der Mittelposition an einen Steuernocken (64) anschlägt, wodurch der Lösearm (52, 54) mitgenommen wird und den zugehörigen, in der entsprechenden Antriebsrichtung sperrenden Sperrarm (44, 46) außer Eingriff bringt.

2. Drehgelenkbeschlag nach Anspruch 1, dadurch gekennzeichnet, daß bei in Mittelstellung befindlichem Betätigungshebel (20) die Mitnehmer 34, 36), die Steuernocken (64), die Sperrarme (44, 46) und die Lösearme (52, 54) klappsymmetrisch zur Verbindungslinie (56) von Schwenkachse (22) und der Achse der Lagerwelle (26) angeordnet sind.

3. Drehgelenkbeschlag nach Anspruch 1 oder 2, dadurch gekennzeichnet, daß die Sperrarme (44, 46) doppelarmig ausgeführt sind, wobei der erste Arm die Sperrfläche ausbildet, während am zweiten Arm an einem Gelenk (50) der zugehörige Lösearm (52, 54) angelenkt ist.

4. Drehgelenkbeschlag nach einem der Ansprüche 1 bis 3, dadurch gekennzeichnet, daß der Steuernocken (64) des in Mittelstellung stehenden Betätigungshebels (20) in geringem Abstand zur im wesentlichen auf den Lagerpunkt weisenden Innenflanke (60) der Mitnehmernase (58) des Lösearms (52, 54) steht, wobei bei beginnendem Verschwenken des Betätigungshebels (20) der Steuernocken (64) durch Mitnahme des Steuerarms (52, 54) den Sperrarm (44, 46) um den Lagerpunkt (48) verschwenkt und nach Freigabe des Stellrades (32) der Steuernocken (64) über die Mitnehmernase rutscht und dadurch nach Beendigung des Verstellvorgans ein selbsttätiges Verriegeln des Sperrarms (44, 46) ermöglicht.

5. Drehgelenkbeschlag nach einem der Ansprüche 1 bis 4, dadurch gekennzeichnet, daß die Mitnehmernase eine Außenflanke (62) aufweist, die so ausgebildet ist, daß der beim nicht verstellenden Rückhub an dieser Außenflanke (62) anschlagende Steuernocken (64) die Nase seitlich wegdrücken und damit den Lösearm (52, 54) ohne Einfluß auf den Sperrarm (44, 46) verschwenken kann, so daß der Steuernocken (64) wieder in Ausgangsstellung zur Innenflanke (60) der Mitnehmernase (58) kommt.

6. Drehgelenkbeschlag nach einem der Ansprüche 1 bis 5, dadurch gekennzeichnet, daß am Lösearm (52, 54) ein Blockiervorsprung (72) angeordnet ist, der sich bei in Ruhestellung befindlichem Lösearm (52, 54) außerhalb des Außenkreises des Stellrades (32) befindet und bei Zug auf den Lösearm (52, 54) durch den Steuernocken (64) dann in den Bewegungskreis der Zahnflanken (28, 30) des Stellrades (32) gelangt, wenn der Sperrarm (44; 46) gerade freikommt.

7. Drehgelenkbeschlag nach einem der Ansprüche 1 bis 6, dadurch gekennzeichnet, daß die Lösearme (52, 54) durch eine Zugfeder (68) miteinander verbunden sind, die in Höhe der Sperrarmachse (48) oder darunter angreift.

8. Drehgelenkbeschlag nach einem der Ansprüche 1 bis 7, dadurch gekennzeichnet, daß sich die Mitnehmer (34, 36), die Sperrarme (44, 46) und das Stellrad (32) in derselben Ebene befinden und daß die Steuernocken (64) und die Lösearme (52, 54) sich in einer gemeinsamen, zweiten Ebene befinden.

9. Drehgelenkbeschlag nach einem der Ansprüche 1 bis 8, dadurch gekennzeichnet, daß die dem Stellrad (32) zugewandte Flanke der Sperrarme (44, 46) eine Kurve aufweist.

10. Drehgelenkbeschlag nach einem der Ansprüche 1 bis 9, dadurch gekennzeichnet, daß die freien, die Sperrflächen tragenden Enden beider Sperrarme (44, 46) durch eine Zugfeder gegeneinander vorbelastet sind.

**Revendications**

1. Armature d'articulation pivotante auto-arrêtante, ajustable angulairement par le mouvement alternatif d'un levier de manoeuvre (20), en particulier pour le réglage en hauteur du siège ou le réglage en inclinaison du dossier de sièges de véhicules,

comportant un bâti (24), dans lequel un arbre à paliers (26) est monté tournant et porte une roue de réglage (32), avec des flancs de dents (28, 30), roue qui est reliée en rotation avec le bras à régler de l'armature d'articulation pivotante,

comportant un axe de pivotement (22), autour duquel on peut faire pivoter le levier de manoeuvre (20), à partir d'une position moyenne, dans les deux directions de rotation et qui se trouve en dehors de la roue de réglage (32),

pour laquelle le levier de manoeuvre (20) porte deux taquets d'entraînement (34, 36), qui, en position moyenne du levier de manoeuvre (20), se trouvent sans prise sur la roue de réglage (32) et dont chacun, lorsqu'on fait pivoter le levier de manoeuvre (20), vient en butée sur un flanc voisin de dent (28 ou 30) de la roue de réglage (32), et fait tourner celle-ci,

et comportant au moins un bras de butée (44; 46), monté pivotant sur le bâti (24), bras qui, dans le cas du levier de manoeuvre (20) se trouvant en position moyenne, est placé contre un flanc de dent (28; 30) de la roue de réglage (32) et bloque celle-ci, et qui, par pivotement du levier de manoeuvre (20) se libère de la prise, caractérisé en ce que

l'axe de pivotement (22) du levier de manoeuvre (20) est monté sur palier dans le bâti (24),

les taquets d'entraînement (34, 36) sont chacun montés sur articulation sur le levier de manoeuvre (20), pivotant autour d'un axe de taquet d'entraînement (40) autour duquel, lorsque le levier manuel se trouve en position moyenne, ils peuvent pivoter sans entrer en contact avec les flancs de dents (28, 30) de la roue de réglage (32), étant entendu qu'à chacun des taquets d'entraînement (34, 36) est associé une butée (axe de pivotement 22) sur le levier de manoeuvre (20), butée qui empêche un pivotement éloignant les taquets d'entraînement (34, 36) des flancs de dents (28; 30) voisins de la roue de réglage (32),

deux cames de commande (64) sont disposées sur le levier de manoeuvre (20), deux bras de butée (44, 46) sont prévus, dont chacun bloque seulement un des sens de rotation, mais qui glisse dans l'autre sens de rotation au dessus des flancs de dents (28; 30) de la roue de réglage (32),

et qu'à chaque bras de butée (44, 46), est associé un levier de déclenchement (52, 54), dont, chaque fois, lorsqu'on fait pivoter le levier de manoeuvre (20) en dehors de sa position moyenne l'un vient en butée contre une came de commande (64), au moyen de laquelle le levier de déclenchement (52, 54) est entraîné et libère de sa prise le bras de butée (44; 46) associé, qui fait blocage dans le sens d'entraînement correspondant.

2. Armature d'articulation pivotante suivant la revendication 1, caractérisée en ce que, lorsque le levier de manoeuvre (20) se trouve en position moyenne, les taquets d'entraînement (34, 36), les cames de commande (64), les bras de butée (44, 46) et les leviers de déclenchement (52, 54) sont disposés symétriquement en basculement par rapport à la ligne (56) reliant l'axe de pivotement (22) et l'axe de l'arbre à paliers (26).

3. Armature d'articulation pivotante suivant les revendications 1 ou 2, caractérisée en ce que les bras de butée (44, 46) sont réalisés avec un bras double, le premier bras formant surface de blocage, tandis que, sur le deuxième bras, le levier de déclenchement (52, 54) associé vient s'articuler sur une articulation (50).

4. Armature d'articulation pivotante suivant l'une des revendications 1 à 3, caractérisée en ce que la came de commande (64) du levier de manoeuvre (20) en position moyenne se trouve à faible distance de la facette intérieure (60), tournée essentiellement vers le point de pivotement, du nez (58) du taquet d'entraînement du levier de déclenchement (52, 54), tandis que, lors du début du pivotement du levier de manoeuvre (20), la came de commande (64), en entraînant le levier de déclenchement (52, 54), fait pivoter le bras de butée (44, 46) autour du point d'appui (48), et qu'après libération de la roue de réglage (32), la came de commande (64) glisse sur le nez du taquet d'entraînement et, de ce fait, après l'achèvement de l'opération de réglage, permet un verrouillage automatique du bras de butée (44, 46).

5. Armature d'articulation pivotante suivant l'une des revendications 1 à 4, caractérisée en ce que le nez du taquet d'entraînement présente une facette extérieure (62) qui est réalisée de telle façon que la came de commande (64), venant en butée sur cette facette extérieure (62) au cours de la course de retour sans réglage, puisse repousser latéralement le nez et, ainsi, puisse faire pivoter le levier de déclenchement (52, 54) sans agir sur le bras de butée (44, 46), de telle sorte que la came de commande (64) vient de nouveau en position de sortie par rapport à la facette intérieure (60) du nez (58) du taquet d'entraînement.

6. Armature d'articulation pivotante suivant l'une des revendications 1 à 5, caractérisée en ce que, sur le levier de déclenchement (52, 54), est disposée une saillie de blocage (72), qui se trouve en dehors du contour extérieur de la roue de réglage (32) quand le levier de déclenchement (52, 54) se trouve en position de repos et qui, par traction sur le levier de déclenchement (52, 54), au moyen de la came de commande (64), vient ensuite dans le cercle de déplacement des flancs de dents (28, 30) de la roue de réglage (32) quand le bras de butée (44; 46) est juste devenu libre.

7. Armature d'articulation pivotante suivant l'une des revendications 1 à 6, caractérisée en ce que les leviers de déclenchement (52, 54) sont reliés entre eux par l'intermédiaire d'un ressort de traction (68) qui est appliqué à hauteur de l'axe (48) du bras de butée, ou en dessous de lui.

8. Armature d'articulation pivotante suivant l'une des revendications 1 à 7, caractérisée en ce que les taquets d'entraînement (34, 36), les bras de butée (44, 46) et la roue de réglage (32) se trouvent dans le même plan et que les cames de commande (64) et les leviers de déclenchement (52, 54) se trouvent dans un même plan commun, différent.

9. Armature d'articulation pivotante suivant l'une des revendications 1 à 8, caractérisée en ce que les facettes des bras de butée (44, 46) tournées vers la roue de réglage (32) présentent une courbure.

10. Armature d'articulation pivotante suivant l'une des revendications 1 à 9, caractérisée en ce que les extrémités libres des deux bras de butée (44, 46), extrémités qui portent les surfaces de butée, sont mises en pré-tension l'une contre l'autre, au moyen d'un ressort de traction.

**Claims**

1. A self-stopping swivel-joint fitting, the angle of which can be adjusted by moving an operating lever (20) to and fro, in particular for the vertical adjustment of a seat or the adjustment of the incline of backrests of vehicle seats,

with a frame (24), in which a bearing shaft (26) is rotatably mounted, which bearing shaft carries a regulating wheel (32) fitted with tooth flanks (28, 30), which regulating wheel is rotatably connected with the arm, which is to be adjusted, of the swivel-joint fitting,

with a swivel axis (22), about which the operating lever (20) can be swivelled from a mid-position in both directions of rotation and which is outside the regulating wheel (32),

where the operating lever (20) carries two drivers (34, 36), which are out of mesh with the regulating wheel (32) when the operating lever (20) is in mid-position and each one of which strikes against and turns an adjacent tooth flank (28 or 30) of the regulating wheel (32) when the operating lever (20) is swivelled,

and with at least one locking arm (44, 46), mounted on the frame (24) so that it can be rotated, which arm rests against a tooth flank (28, 30) of the regulating wheel (32) when the operating lever (20) is in mid-position and locks this regulating wheel (32) and is brought out of mesh by swivelling the operating lever, characterised in that,

the swivel axis (22) of the operating lever (20) is mounted in the frame (24),

the drivers (34, 36) are each hinged to the operating lever (20) so that they can be swivelled about a driving axis (40), about which they can be swivelled without contact with the tooth flanks (28, 30) of the regulating wheel (32) when the hand lever is in mid-position, where each driver (34, 36) is allocated a stop (swivel axis 22) on the operating lever (20), which prevents the drivers (34, 36) from swivelling away from the adjacent tooth flank (28, 30) of the regulating wheel (32),

two control cams (64) are arranged on the operating lever (20),

two locking arms (44, 46) are provided, each of which only locks in one direction of rotation, but which slips over the tooth flanks (28, 30) of the regulating wheel (32) in the other direction of rotation,

and in that each locking arm (44, 46) is allocated a release arm (52, 54), one of which in each case strikes against a control cam (64) when the operating lever (20) is swivelled out of mid-position, whereby the release arm (52, 54) is taken along and brings the associated locking arm (44, 46), locking in the corresponding direction of drive, out of mesh.

2. A swivel-joint fitting according to Claim 1, characterised in that, when the operating lever (20) is in mid-position, the drivers (34, 36), the control cams (64), the locking arms (44, 46) and the release arms (52, 54) are arranged so that they can be tilted symmetrically to the connecting line (56) of the swivel axis (22) and the axis of the bearing shaft (26).

3. A swivel-joint fitting according to Claim 1 or 2, characterised in that the locking arms (44, 46) are constructed double-armed, where the first arm forms the locking face, whilst the associated release arm (52, 54) is hinged to the second arm on a joint (50).

4. A swivel-joint fitting according to any one of Claims 1 to 3, characterised in that the control cam (64) of the operating lever (20) in mid-position is at a short distance from the inside flank (60) of the driving lug (58) of the release arm (52, 54), the inside flank pointing substantially to the bearing point, where, as the operating lever starts to be swivelled, the control cam (64) swivels the locking arm (44, 46) about the bearing point (48) by taking along the steering arm (52, 54) and after the reguating wheel (32) is released the control cam (64) slips over the driving lug and thus allows automatic locking of the locking arm (44, 46) after the adjustment process has finished.

5. A swivel-joint fitting according to any one of Claims 1 to 4, characterised in that the driving lug has an outside flank (62), which is constructed in such a way that the control cam (64) striking against this outside flank (62) on the non-adjusting return stroke can push away the lug laterally and thus swivel the release arm (52, 54) without affecting the locking arm (44, 46), in such a way that the control cam (64) comes back to its starting position on the inside flank (60) of the driving lug (58).

6. A swivel-joint fitting according to any one of Claims 1 to 5, characterised in that a blocking projection (72) is arranged on the release arm (52, 54), which blocking projection is positioned outside the outer circumference of the regulating wheel (32) when the release arm (52, 54) is in the rest position and, just at the time when the locking arm (44, 46) is released, comes into the circle of movement of the tooth flanks (28, 30) of the regulating arm (32) when the release arm (52, 54) is pulled by the cams (64).

7. A swivel-joint fitting according to any one of Claims 1 to 6, characterised in that the release arms (52, 54) are interconnected by a tension spring (68), which engages at the level of or below the locking arm axis (48).

8. A swivel-joint fitting according to any one of Claims 1 to 7, characterised in that the drivers (34, 36), the locking arms (44, 46) and the regulating wheel (32) are in the same plane and in that the control cams (64) and the release arms (52, 54) are in a common, second plane.

9. A swivel-joint fitting according to any one of Claims 1 to 8, characterised in that the flank of the locking arms (44, 46) facing the regulating wheel (32) is curved.

10. A swivel-joint fitting according to any of Claims 1 to 9, characterised in that the free ends of both locking arms (44, 46) carrying the locking faces are preloaded against each other by a tension spring.

FIG. 1

FIG. 2

FIG. 3